# EUROPÄISCHE PATENTSCHRIFT

(11) **EP 0 634 093 B1**
(45) Veröffentlichungstag und Bekanntmachung des Hinweises auf die Patenterteilung: **25.03.1998**
(21) Anmeldenummer: 94109466.6
(22) Anmeldetag: 20.06.1994
(51) Int. Cl.: A01D 90/02

(54) **Förder- oder Schneidtrommel für landw. Erntegüter**
Conveyor or cutting drum for agricultural crops
Tambour à convoyer et couper pour produits agricoles

(30) Priorität: 12.07.1993 DE 4323214
(43) Veröffentlichungstag der Anmeldung: 18.01.1995
(73) Patentinhaber: CLAAS SAULGAU GMBH, D-88340 Saulgau (DE)
(72) Erfinder: Wetzel, Karl-Heinz, D-88340 Saulgau (DE)

(56) Entgegenhaltungen:
- EP-A- 0 093 223
- WO-A-84/02252

## Beschreibung

Die Erfindung bezieht sich auf eine Förder- oder Schneidtrommel für landwirtschaftliche Erntegüter nach dem Oberbegriff des Anspruches 1.

Eine Fördertrommel dieser Gattung ist aus der EP-OS 0 128 174 bekannt. Hier hat sich der Erfinder die Aufgabe gestellt, die Förderorgane in einzelne Elemente aufzuteilen und sie leicht montier- und demontierbar auf einer zylinderischen Trommel zu befestigen.

Fördertrommeln dieser Art haben sich in der Praxis nicht bewährt, weil die bei dem rauhen Betrieb auftretenden hohen Beanspruchungen der Förderelemente nicht ausreichend auf den Trommelmantel übertragen werden konnten. Auch hat es sich als wünschenswert gezeigt, bei einer dort gezeigten Befestigung mit mehreren Schweißnähten den hohen Aufwand für eine Schweißvorrichtung zu reduzieren.

Beide Nachteile können nach der Erfindung dadurch vermieden werden, daß die Förder- oder Schneidelemente sowohl in radialer Richtung nach außen und in Umfangrichtung mit dem Trommelmantel, als auch unter sich in Umfangrichtung formschlüssig miteinander verbunden sind.

In einer bevorzugten Ausführungsform wird vorgeschlagen, daß alle Förder- oder Schneidelemente bis auf mindestens eines im wesentlichen gleich ausgestaltet sind und durch radiales Einführen der hakenförmigen Vorsprünge in den geschlitzten Trommelmantel und anschließendes Verdrehen in Umfangrichtung auf dem Trommelmantel montierbar sind, während mindestens ein Förder- oder Schneidelement oder dergleichen in eine Lücke zwischen zwei Förder- oder Schneidelemente derart eingeführt werden kann, daß es mit einer kreisbogenförmigen Seite auf dem Trommelmantel aufliegt und mit zwei freien Enden kraft- oder formschlüssig mit den, eine Lücke bildenden Förder- oder Schneidelementen verbunden ist.

Es ist weiterhin nach der Erfindung vorteilhaft, die in radialer Richtung einsetzbaren Förder- oder Schneidelemente oder dergleichen mit den, eine Lücke bildenden Förder- oder Schneidelementen und/oder mit dem Trommelmantel durch Schweißung, Verschraubung oder dergleichen fest zu verbinden.

Wenn die hakenförmigen Vorsprünge der Förder- oder Schneidelemente gemäß Anspruch 4 ausgebildet werden, hat das den Vorteil, daß die Förder- oder Schneidelemente bei der Montage bereits in eine genaue Lage vorgespannt werden und daß durch eine Verkeilung mit den Enden der Schlitze in dem Trommelmantel eine besonders feste und spielfreie Verbindung hergestellt wird. Dieser Vorteil wirkt sich besonders auch im Reparaturfall aus, weil dann einzelne Elemente ohne Schweiß- oder Montagevorrichtung paßgenau ausgetauscht werden können.

Die Erfindung wird beispielsweise anhand von zwei Abbildungen erläutert:

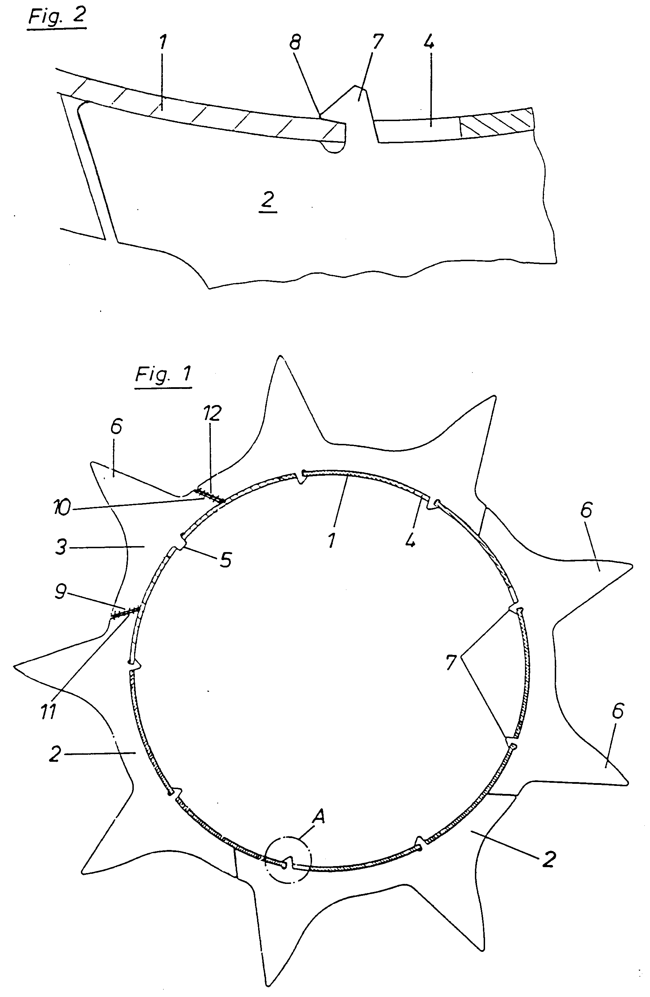

- Figur 1: zeigt einen Schnitt durch eine Fördertrommel für einen Ladewagen
- Figur 2: zeigt einen Auschnitt A in vergrößertem Maßstab

Ein nicht dargestellter Ladewagen ist mit einer Fördertrommel ausgerüstet, bei der auf einem kreiszylinderförmigen Mantel (1) Förderelemente (2, 3) angeordnet sind. Der Trommelmantel (1) hat auf seinem Umfang Langloch-Schlitze (4), die in mehreren Reihen parallel zueinander auf dem Trommelmantel (1) vorhanden sind. Mehrere gleiche, flache Förderelemente (2) haben je zwei Fördernasen (6) und je zwei hakenförmige Vorsprünge (7). Die Öffnung der Haken (8) ist wenig größer, als die Dicke des Trommelmantels (1) und verjüngt sich nach innen auf eine Weite, die gleich oder etwas kleiner ist als die Dicke des Trommelmantels (1). Weiter ist ein Förderelement (3) vorhanden, das nur eine Fördernase (6) besitzt. Dieses hat einen etwa radial gestellten Vorsprung (5). Zur Montage werden die vier gleichen Förderelemente (2) mit ihren hakenförmigen Vorsprüngen (7) in die Schlitze (4) des Trommelmantels (1) eingeführt und durch Schlagen oder Pressen so auf dem Umfang verdreht, daß sich die Haken (8) der Vorsprünge (7) mit dem Trommelmantel (1) verkeilen. Nachdem alle Förderelemente (2) auf diese Weise montiert sind, wird ein Förderelement (3) etwa radial eingesetzt, wobei sich die freien Enden (9, 10) des Förderelementes (3) formschlüssig an die freien Enden (11, 12) der Förderelemente (2) anlegen und mit diesen durch eine kurze Schweißnaht verbunden werden.

Auf diese Weise werden die Förderelemente (2, 3) ohne jede Vorrichtung fest mit dem Trommelmantel verbunden. Diese Ausgestaltung ist besonders kostengünstig und beanspruchungsgerecht, wobei es gegebenenfalls möglich ist, die Förderelemente (2, 3) auch noch durch kurze Schweißnähte ebenfalls vorrichtungslos mit dem Trommelmantel (1) zu verbinden.

## Patentansprüche

1. Förder- oder Schneidtrommel für landwirtschaftliche Erntegüter mit einem kreiszylinderförmigen Trommelmantel und flachen, segmentförmigen Förder- oder Schneidelementen, die mit dem Trommelmantel durch hakenförmige, in Langloch-Schlitze des Trommelmantels einführbare Vorsprünge verbindbar sind, dadurch gekennzeichnet, daß die Förder- oder Schneidelemente (2, 3) sowohl in radialer Richtung nach außen und in Umfangrichtung mit dem Trommelmantel (1), als auch unter sich in Umfangrichtung formschlüssig miteinander verbunden sind.

2. Förder- oder Schneidtrommel nach Anspruch 1, dadurch gekennzeichnet, daß alle Förder- oder Schneidelemente (2) bis auf mindestens eines (3) im wesentlichen gleich ausgestaltet sind und durch Einführen der hakenförmigen Vorsprünge (7) in den geschlitzen (4) Trommelmantel (1) und anschließendes Verdrehen in Umfangrichtung montierbar sind, während mindestens ein Förder- oder Schneidelement (3) oder dergleichen in eine Lücke zwischen zwei Förder- oder Schneidelemente (2) derart eingefügt werden kann, daß es mit einer kreisbogenförmigen Seite auf dem Trommelmantel (1) aufliegt und mit zwei freien Enden (9, 10) kraft- oder formschlüssig mit den eine Lücke bildenden Förder- oder Schneidelementen (2) verbunden ist.

3. Förder- oder Schneidtrommel nach Anspruch 2, dadurch gekennzeichnet, daß die in radialer Richtung einsetzbaren Förder- oder Schneidelemente (3) oder dergleichen mit den, eine Lücke bildenden Förder- oder Schneidelementen (2) und/oder mit dem Trommelmantel (1) durch Schweißung, Verschraubung oder dergleichen fest verbunden sind.

4. Förder- oder Schneidtrommel nach den Ansprüchen 1 bis 3, dadurch gekennzeichnet, daß die Wirkflächen (8) der hakenförmigen Vorsprünge (7) der Förder- oder Schneidelemente (2) leicht konisch ausgebildet sind, so daß sie sich beim Verdrehen auf dem Umfang des Trommelmantels (1) mit diesem verklemmen.

## Claims

1. A conveyor or cutting drum for agricultural crops comprising a drum casing in the shape of a circular cylinder and flat, segment-shaped conveyor or cutting elements which can be connected to the drum casing by hook-shaped projections which can be introduced into slits in the drum casing characterised in that the conveyor or cutting elements (2, 3) are both positively lockingly connected to the drum casing (1) in a radial direction outwardly and in the peripheral direction and also to each other in the peripheral direction.

2. A conveyor or cutting drum according to claim 1 characterised in that all conveyor or cutting elements (2) except for at least one (3) are of substantially the same configuration and can be mounted by introduction of the hook-shaped projections (7) into the slitted (4) drum casing (1) and subsequent turning in the peripheral direction while at least one conveyor or cutting element (3) or the like can be inserted into a gap between two conveyor or cutting elements (2) in such a way that it bears with an arcuate side against the drum casing (1) and is force-lockingly or positively lockingly connected with two free ends (9, 10) to the conveyor or cutting elements (2) forming a gap.

3. A conveyor or cutting drum according to claim 2 characterised in that the conveyor or cutting elements (3) or the like which can be inserted in the radial direction are fixedly connected to the conveyor or cutting elements (2) forming a gap and/or to the drum casing (1) by welding, screw means or the like.

4. A conveyor or cutting drum according to claims 1 to 3 characterised in that the operative surfaces (8) of the hook-shaped projections (7) of the conveyor or cutting elements (1) are of a slightly conical configuration so that in the rotary movement on the periphery of the drum casing (1) they become locked thereto.

## Revendications

1. Tambour de convoyage ou de sectionnement pour produits agricoles, comprenant une enveloppe cylindrique droite et des éléments convoyeurs ou sectionneurs aplatis en forme de segments, qui peuvent être reliés à l'enveloppe du tambour par des protubérances en forme de crochets, pouvant être insérées dans des lentes oblongues de l'enveloppe du tambour, caractérisé par le fait que les éléments convoyeurs ou sectionneurs (2, 3) sont reliés, à la fois, à l'enveloppe (1) du tambour radialement vers l'extérieur et dans le sens périphérique, et les uns aux autres dans le sens périphérique, par concordance de formes.

2. Tambour de convoyage ou de sectionnement selon la revendication 1, caractérisé par le fait que tous les éléments convoyeurs ou sectionneurs (2), à l'exception d'au moins un (3), sont pour l'essentiel de configurations identiques et peuvent être montés par insertion des protubérances (7) en forme de crochets dans l'enveloppe (1) du tambour pourvue de lentes (4), et par rotation consécutive dans le sens périphérique ; tandis qu'au moins un élément convoyeur ou sectionneur (3), ou élément similaire, peut être introduit dans un interstice entre deux éléments convoyeurs ou sectionneurs (2), de façon telle qu'il repose sur l'enveloppe (1) du tambour par un côté en arc de cercle et soit relié par deux extrémités libres (9, 10), mécaniquement ou par conformation, aux éléments convoyeurs ou sectionneurs (2) formant un interstice.

3. Tambour de convoyage ou de sectionnement selon la revendication 2, caractérisé par le fait que les éléments convoyeurs ou sectionneurs (3) ou éléments similaires, insérables dans le sens radial, sont reliés rigidement aux éléments convoyeurs ou sectionneurs (2) formant un interstice, et/ou à l'enveloppe (1) du tambour, par soudage, boulonnage ou opération analogue.

4. Tambour de convoyage ou de sectionnement selon les revendications 1 à 3, caractérisé par le fait que les surfaces efficaces (8) des protubérances (7) en forme de crochets des éléments convoyeurs ou sectionneurs (2) sont d'une réalisation légèrement conique, de manière qu'elles se coincent avec l'enveloppe (1) du tambour lors de la rotation sur le pourtour de cette dernière.
